# EUROPEAN PATENT SPECIFICATION

(11) **EP 4 007 273 B1**
(45) Date of publication and mention of the grant of the patent: **25.02.2026**
(21) Application number: 20306468.8
(22) Date of filing: 30.11.2020
(51) Int. Cl.: H04N 7/18, F03B 3/00, F03B 11/00

(54) **METHOD AND DEVICE FOR INSPECTING A HYDRO TURBINE**
VERFAHREN UND VORRICHTUNG ZUR INSPEKTION EINER WASSERTURBINE
PROCÉDÉ ET DISPOSITIF D'INSPECTION D'UNE TURBINE HYDRAULIQUE

(43) Date of publication of application: 01.06.2022
(73) Proprietor: GE Renewable Technologies, 38100 Grenoble (FR)
(72) Inventor: THEURER, Charles, Burton, Niskayuna, New York 12309-1027 (US); FORMAN, Douglas R., Niskayuna, New York 12309-1027 (US); TAN, Yew Teck, Niskayuna, New York 12309-1027 (US); HOLOVASHCHENKO, Viktor, Niskayuna, New York 12309-1027 (US); TELLER, Olivier, 38100 GRENOBLE (FR); DIXON, Walter V., Niskayuna, New York 12309-1027 (US); AUGER-HABEL, David, Brossard, Québec J4Z 3H8 (CA)
(74) Representative: Santarelli

(56) References cited:
- JP-A- 2019 211 438
- US-A1- 2008 300 742
- US-A1- 2012 134 657
- US-A1- 2019 137 420

## Description

### TECHNICAL FIELD AND PRIOR ART

The invention relates to a method and a system designed to inspect hydraulic machines and/or submerged components of a hydroelectric installation, in particular runners of hydro turbines and pumps, in particular bulb, Kaplan, Francis, pump turbine runners or pump impellers, in order to detect and characterize defects, especially cavitation damages and cracks.

Known methods of inspecting a turbine runner require at least dewatering the runner and installing a platform underneath or bringing the runner to a workshop, which usually takes weeks, or even months. This means the runner is not available for the power generation for an extended period of time. As a consequence, the period between two inspections is long and defects may be missed or allowed to grow to failure. JP 2019 211438 A discloses a device for inspecting a damage or a crack of a hydro turbine blade surface. An underwater remotely operated vehicle comprises an articulated probe. The probe comprises a light emitting unit and a lighting receiving unit in order to perform a three dimensional measurement of the blade surface.

Therefore, a new device and a new method are required to inspect hydraulic machines and/or submerged components of a hydroelectric installation, in particular runners of hydro turbines more easily, without dewatering the installation or the turbine.

A new device and a new method are also required to inspect hydraulic machines and/or submerged components of a hydroelectric installation, in particular runners of hydro turbines, in areas where space is limited, for example between blades of the turbine.

### PRESENTATION OF THE INVENTION

The invention relates firstly to a device for inspecting a surface of a part of a hydro turbine, in particular of a runner of said turbine, for example comprising at least one defect such as a local surface deformation and/or a cavitation damage or a crack, or, more generally, at least one coating damage and/or material loss due for example to a cavitation damage or crack, or to an impact, and/or damages or cracks or defects due to fatigue or corrosion.

Said device comprises a remote operated vehicle (ROV) or autonomous underwater vehicle (AUV). In the rest of this description a reference to an ROV should also be understood as covering an AUV.

Said device further comprises at least one floatable or buoyant probe or a probe and means to make said at least one probe floatable or buoyant, said probe comprising for example at least one imaging device, for example at least one camera, for example at least one ultra-violet and/or visible camera and/or 360° camera, and/or scanner and/or laser scaler. A probe can be or comprise a device, for example of the type mentioned above, to explore its environment and designed to transmit data or information, for example one or more image(s) about it.

Said device can further comprise transmission means for transmitting data from said probe, for example to said vehicle and/or to a ground station.

Said means for transmitting data from said probe to said vehicle can comprise means to send one or more data or image through one or more wire(s) and/or through an optical fibre and/or can be means for a wireless transmission between said probe and said vehicle and/or a ground station or an optical component connected to said ground station. Wireless transmission can be for example optical or acoustic, the probe comprising an optical or acoustic emitter and the ROV, or the ground station or an optical component connected to the ground station, an optical or acoustic receptor.

Said means to make said at least one probe floatable can comprise for example one or more buoy(s): the probe without the buoy would naturally sink in the water as its mass is superior to the volume equivalent mass of water, but the presence of buoy(s) make(s) it floatable. Alternatively, or in combination with said one or more buoy(s), said means can comprise one or more thruster(s).

The probe can be buoyant. A buoyant probe may also be used with an external buoy either to reinforce the floatability or provide an orientation function: the force from the buoy allows to guarantee the verticality of the probe or can force an angle towards gravity.

Buoyancy of the probe can be adapted by adding ballast and/or a floating device.

The invention also covers the following cases:
- a naturally sinking probe associated with an external buoy to make it floatable and, for example, adjust the angle of the probe, for example of a camera;
- a naturally buoyant or sinking device associated with one or more thrustor(s) either to reinforce floatability or to pilot the probe position or angle.

A device according to the invention can comprise at least one cable or a tether connecting at least said probe and either said vehicle or a ground station. The tether can include one or more electric wire(s) to transmit data from said probe to said ROV or to said ground station and/or to supply the probe with power (from the ROV).

Alternatively, a device according to the invention can be cable-less or tether-less, the probe comprising means to send data or images wireless to said vehicle or to said ground station.

In a variant, the probe is connected to the ROV by a tether to supply the probe with power and data can be exchanged tether-less or wireless between the probe and the ROV and/or the ground station.

A tether implemented in this invention, in particular between the ROV and the probe, can be fully flexible or flexible only in one direction (which allows for instance a control of the orientation of the probe, for example of the camera, and/or the ability to push the probe in the inspected machine, for example in a runner).

The tether can be flexible in bending and stiff in torsion (similar to how borescope probes are made). This property gives the inspector the ability to adjust the probe orientation by turning the ROV about the vertical axis. Said vehicle can also be provided with at least one on-board imaging device, for example at least one camera.

A device according to the invention can further comprise a cable or a tether connecting said vehicle and a (or said) ground station.

In addition, there can be a further tether between the ground station and the probe in order to power the probe from the ground station and/or to exchange data between the probe and the ground station; data or images of at least part of the inspected parts of the hydro-turbine, for example defects or damages, can thus be sent from the probe to the ground station and/or control data can be sent from the ground station to the probe.

In a variant, a tether-less or wireless communication is established between the probe and a (or said) ground station, or an optical component connected to said ground station by a tether and/or at least one optical fibre, in order to exchange data between the probe and the ground station; data or images of at least part of the inspected parts of the hydro-turbine, for example defects or damages, can thus be sent from the probe to the ground station and/or control data can be sent from the ground station to the probe.

In a particular embodiment, a tether-less or wireless communication is established between an optical component (receiver and/or emitter) and the probe and the optical component is connected to a (or said) ground station via at least one tether and/or at least one optical fibre; thus data can be exchanged between the probe and the ground station via said optical component; data or images of at least part of the inspected parts of the hydro-turbine, for example defects or damages, can thus be sent from the probe to the ground station, via the optical component and/or control data can be sent from the ground station to the probe, also via the optical component. Said device, or a system comprising said device, may further comprise means, or means programmed, to display:
- data or at least one image taken by said probe;
- and/or data or at least one image of at least part of said probe from said at least one on-board imaging device or camera. Displaying part of said probe provides context information about the inspected part of the hydraulic machine and enables an operator to perform an efficient and thorough inspection.

A device according to the invention may further comprise one or more light source(s) for lighting a portion of the runner inspected by said probe.

A device according to the invention can further comprise means for processing data from said probe to generate at least one image of at least a part of a surface of said runner comprising said cavitation damage or crack.

The above-mentioned means, or means programmed, to display and/or the means for processing data can form part of a ground station.

A further device according to the invention for inspecting a surface of a part of a hydro turbine, in particular of a runner of said turbine, can comprise a device as defined above and/or disclosed in this application and can further comprise at least one second remote operated vehicle (ROV) or autonomous underwater vehicle (AUV), for example comprising at least one floatable or buoyant probe or at least one probe and means to make said at least one probe floatable or buoyant, said probe comprising for example at least one imaging device, for example a camera and/or a scanner, and/or laser scaler and/or at least one lighting device; it may further comprise means for transmitting data from said probe to said second remote operated vehicle and/or to a ground station. Said second ROV or AUV can further comprise a cable or a tether connecting said probe and said vehicle or a ground station. The tether can include wires to transmit data from said probe to said second ROV or AUV. Alternatively, it can be a cable-less or tether-less device. Said at least one second remote operated vehicle (ROV) or autonomous underwater vehicle (AUV) can be a device according to the invention.

The invention also concerns a system according to the invention, for inspecting a surface of a part of a hydro turbine, in particular of a runner of said turbine, for example comprising at least one defect such as a local surface deformation and/or a cavitation damage or a crack, or, more generally, at least one coating damage and/or material loss due for example to a cavitation damage or crack, or to an impact, and/or damages or cracks or defects due to fatigue or corrosion. Said system comprises one or more devices according to the invention and may comprise a ground station, comprising for example means, or means programmed, to display data or images received from said probe and/or the means for processing data received from said probe. Depending on the different types of connections between the probe, the ROV and the ground station, different communication configurations can be implemented by the invention, as explained below. In one particular embodiment, the probe is connected to the ground station by a tether.

The invention further concerns a method of inspecting a surface of a part of a hydro turbine, in particular of a runner of said turbine, for example comprising at least one defect such as a local surface deformation and/or a cavitation damage or crack or, more generally, at least one coating damage (painting for example) and/or material loss due for example to a cavitation damage or crack, or to an impact, and/or damages or cracks or defects due to fatigue or corrosion, said method comprising:
- positioning a probe of at least one device according to the invention in said runner;
- making images and/or providing data or images of said at least one damage or crack with said probe of said device.

Said data or images can be sent to said ROV or to a ground station, via a tether or wireless.

A method according to the invention may further comprise processing said images and/or said data to generate at least one image and/or data of at least one said defect or damage or crack.

Said method may comprise inspecting one or more runner blade(s), and/or one or more stay vanes and/or one or more wicket gates (or guide vanes) and/or the draft tube of said turbine and/or a runner hub such as a Kaplan runner hub.

A method according to the invention may comprise positioning one or more lighting device, for example with the same ROV or AUV or with a second remote operated vehicle or autonomous underwater vehicle, to lighten at least one surface inspected by said probe.

Data or at least one image from said probe and/or at least one image of said probe taken by at least another imaging device, for example a camera, for example an on-board camera on said ROV, and data or an image from said probe can be displayed.

In further embodiments of a device or of a method according to the invention, data or images are transmitted directly from the probe, for example a camera, to a ground station:
- and/or the probe includes means for receiving control data from the ground station; thus, communication between the probe, for example an imaging device, for example a camera, and a ground station can be bidirectional, wireless and/or via a tether: for example an imaging device, for example a camera, can send images to the ground station and the ground station can control the imaging device (for example the ground station controls switching the probe on/off, and/or adjusts focus, and/or resolution, and/or a frame rate...);
- and/or a control of the probe, for example as mentioned above, can be performed by the ROV, wireless or via a tether;
- and/or a powering of the probe, for example an imaging device, for example a camera, can be done by batteries in the probe, or from the ROV or from a ground station (wireless or via a tether);
- and/or at least one or more light source or one or more lighting device is controlled (wireless or via a tether) either by or through the ROV or from a ground station; and/or it is powered either by batteries or from the ROV or from a ground station; for example, one can thus control the switching on/off, and/or the intensity and/or the wavelength of the light(s).

Depending on the different types of connections between the probe, the ROV and the ground station, different communication configurations can be implemented in a device or a system or a method according to the invention, for example:
- the probe can be connected to the ROV with a 1^{st} tether, the ROV being connected to the ground station with a 2^{nd} tether;
- or the probe can be connected tether-less or wireless to the ROV, the ROV being connected to the ground station with a tether;
- or the probe can be connected to the ROV with a 1^{st} tether, the ROV being connected tether-less or wireless to a 2^{nd} tether, or to an optical component which is itself connected to a 2^{nd} tether, said 2^{nd} tether being connected to the ground station;
- or the probe can be connected tether-less to the ROV, the ROV being connected tether-less to a tether, or to an optical component which is itself connected to a tether, and said tether is connected to the ground station;
- or both the probe and the ROV can be connected tether-less or wireless to a tether, or to an optical component which is itself connected to a tether, and said tether is connected to the ground station;
- or the probe can be connected to ground station with a 1^{st} tether (for data transmission or exchange and/or power supply), the probe being connected to the ROV
- for example with a 2^{nd} tether or wireless - for what is not supplied from ground station; the ROV can be connected to ground station with a 3^{rd} tether.

The hydro-turbine can be of the bulb or Kaplan or Francis or pump type or reversible pump turbine type.

### BRIEF DESCRIPTION OF THE DRAWINGS

- Figure 1 shows a runner of a hydro turbine to which the invention can be applied;
- Figures 2A and 2B show examples of cavitation damage in a runner of a hydro turbine;
- figure 3A is a schematic representation of a system comprising a remote operating vehicle (ROV) according to the invention and performing an inspection of a blade of a hydro turbine;
- figure 3B-3E are schematic representations of different configurations of a system comprising a remote operating vehicle (ROV) according to the invention and performing an inspection of a blade of a hydro turbine;
- figures 4A and 4B show a display of two images, one from a camera located on-board of the ROV and one from a 360° camera of the probe for a close inspection of a runner.
- Figures 5A and 5B show examples of cracks in a runner of a hydro turbine;
- Figures 6A and 6B are examples of a lighting device combined with a camera.

### DETAILED PRESENTATION OF PARTICULAR EMBODIMENTS

The invention applies to bulb, Kaplan, Francis, pump turbine runners or pump impellers.

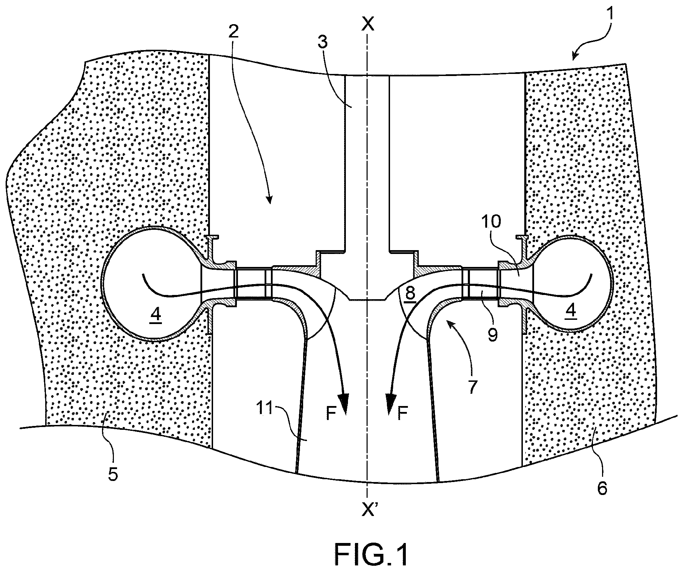

Figure 1 represents a hydraulic machine 1, more precisely a pump turbine 2, for converting hydraulic energy into electrical energy. A shaft 3 is coupled to a runner 7 and to the rotor of a generator (not shown on the figure) which also has an alternator that converts mechanical energy into electrical energy. The machine also includes a volute 4 that is supported by concrete blocks 5 and 6.

A penstock (not shown on the figure) extends between a non-represented upstream reservoir and the volute 4. This penstock forces a water flow to power the turbine. Water flows between blades 8 of the runner 7 and rotates them around an axis x-x' of the shaft 3.

The machine further comprises:
- a distributor, comprising a plurality of movable guide vanes or wicket gates 9 that are evenly distributed around the runner; each of them has an adjustable pitch around an axis parallel to x-x' and can be swivelled to regulate the water flow rate, all guide vanes being oriented with a same angle relative to a closed position;
- a pre-distributor, which comprises a plurality of fixed vanes (or stay vanes) 10, evenly distributed around the axis of rotation x-x', and disposed upstream of and around the distributor.

Below the runner, water is evacuated through a draft tube and tail water tunnel 11.

Such a hydraulic machine must be inspected to detect defects, in particular local surface deformation, and/or cracks, and/or wear, and/or damages, and/or impacts, and/or material loss, for example due to cavitation, or damages or cracks due to fatigue or corrosion, which all appear during the use of the machine. Coating damages must also be detected.

The other kinds of turbines or pump impellers should also be inspected for at least one of the above-mentioned defects or damages, for example cavitation damages or cracks or damages or cracks due to fatigue or corrosion. In particular, the runners of such turbines also comprise blades that should be inspected for defects, for example cavitation damages or cracks.

Cavitation is the vaporization of a volume of a liquid. When this happens adjacent to a solid, the fluid momentum associated with the collapse of the vapour volume can damage the solid material. This problem can be persistent when high velocities and forces are used to move the fluid, as in a turbine or pump. Often, once cavitation damage has occurred in a given location, the likelihood of additional damage in the same place increases.

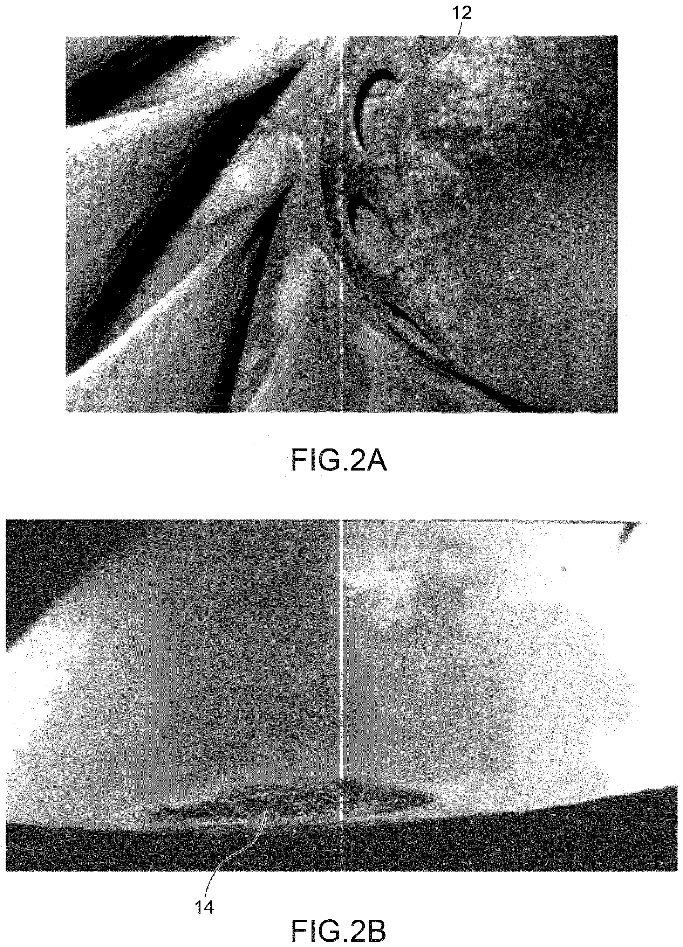

More precisely, cavitation damage usually consists of a surface damage from which material of the hydro-turbine or of the runner of said hydro-turbine is removed; a cavitation damage can have many different sizes; it can for example have a size of about 20 cm x 20 cm, but there are also very small cavitation damages (for example at the beginning of the damage) and then the damage can become larger. A first example of cavitation damage 12 (a crown cavitation damage, at a blade to crown junction) is shown on figure 2A. A second example is shown on figure 2B which represents a clearance cavitation damage 14 (blade tip diameter for a Kaplan turbine).

It has to be noted that a cavitation damage can occur anywhere on both sides of a blade 8 (figure 1), on the crown and on the band surface (not shown on figure 1). It is therefore preferable to be able to perform inspection in-between the blades. For Francis or pump turbines or pump impellers, the inter-blade distance is limited and can be for example of about 150 mm or more generally comprised between 500 mm or 300 mm and 50 mm or 100 mm or 200 mm. Even for the largest inter-blade distances (larger than 400 mm), it is very difficult to inspect the surfaces of the blades.

A cavitation damage can be first identified by its shininess, for example due to a loss of polish of the material.

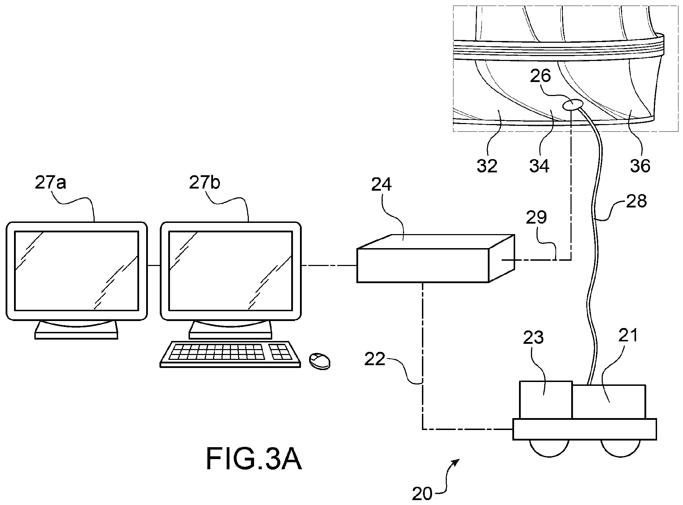

An example of an inspection device according to the invention is schematically illustrated on figure 3A. A floatable or buoyant probe 26 (or a probe associated with means for making it floatable or buoyant) is connected to a ROV (remote operated vehicle) by at least one cable or one tether 28, a tether being able to perform a mechanical and an electrical connection. Said probe 26 comprises for example at least one imaging device, for example at least one laser scanner and/or laser scaler and/or at least one camera, for example a 360° camera, and can be used to characterize a damage 12, for example a cavitation damage and/or measure the quantity of removed material. A laser scaler is used in combination with an imaging device, for example a camera. It provides a scale reference by generating 2 parallel laser beams at a given (known) distance which generate 2 points or marks which are visible on the mage provided by said imaging device. The probe has a smaller size than the ROV to access areas where the ROV could not fit, for instance inter-blade channels.

The tether 28 can be fully flexible or flexible only in one direction (which allows for instance a control of the orientation the probe, for example of the imaging device, for example a camera, and/or the ability to push the probe in the inspected machine, for example in a runner).

Specifically, the probe tether 28 can be flexible in bending and stiff in torsion (similar to how borescope probes are made). This property gives the inspector the ability to adjust the probe orientation by turning the ROV about the tether axis, the ROV thus turning the tether, which turns the probe. The advantage of this approach is greater when one or more laser scaler(s) is in use, giving the ability to precisely position the laser scaler(s) with respect to a defect, the dimensions of which are being estimated.

During an inspection, the probe 26 can be located close to surface(s) of the blades (or of any other inspected part) of a runner or of any other inspected part of a hydraulic machine and can perform data measurements and/or imaging to acquire images from said surfaces. The probe 26 sends data to the ROV 20, for example via the tether and/or an optical fibre and/or wireless. Said data can be recorded for example in a memory in the ROV and/or of the computer 24. Wireless communication can be optical (see for example: https://www.hydromea.com/underwater-wireless-communication/) or acoustic (see for example: https://popotomodem.com/?gclid=Cj0KCQjw59n8BRD2ARIsAAmgPmJWs6po5sL5HYh33u2D W-VjMOya7Tyi6QEZmsASTwx-tkQSrm6KHSMaAnCqEALw wcB).

For acoustic transmission, acoustic modems can be implemented on both the probe's side and on the ROV's side, see for example: https://dosits.org/people-and-sound/communication/how-is-sounds-used-to-transmit-data-underwater/.

The probe can comprise an optical or acoustic emitter and the ROV an optical or acoustic receptor.

Optical communication is favoured by the clear water and/or by the fact that the turbine is usually completely closed and therefore there is no external light to perturb the data transfer.

The cable or the tether 28 has a length, for example between 2 m and 10 m (but longer tether may be needed, for example for inspection of horizontal turbines) allowing positioning the probe within the runner, for example between two neighbouring blades, while the ROV remains below the runner, for example in the suction pipe 11. Thus, the probe can float up into the runner and its position can be controlled by moving the ROV and/or by varying the length of the cable or the tether. The ROV can be provided with a reel or a coil or a device to wind or unwind one or more cable and/or tether.

The floatability or buoyancy of the probe enables it to be inserted into the runner from below. The floatability or buoyancy of the probe can be natural, the probe being itself floatable or buoyant. Alternatively, the floatability or buoyancy of the probe can be achieved by coupling the probe 26 to at least one buoy and/or at least one thruster. An underwater thruster may comprise a motor and a propeller. An underwater thruster is disclosed on https://bluerobotics.com/store/thrusters/t100-t200-thrusters/t200-thruster/. Another underwater thruster is disclosed in WO2016075631.

For example, a negatively buoyant probe (a probe that would naturally sink in the water as its mass is superior to the mass of the equivalent volume of water) can be equipped with one or more buoy and/or one or more thrustor(s) that push(es) it upwards and compensate the negative buoyancy.

Using buoyant probes and probes with thrusters offer several advantages:
- a buoyant probe is the most economical way to have a probe that can enter in a turbine runner in a vertical shaft configuration;
- the use of one or more thrustor(s) may allow a more accurate positioning of the probe; it also allows entering in a turbine with a horizontal shaft arrangement.

Buoyancy of the probe can be adapted or varied by adding ballast and/or a floating device.

If the probe comprises at least one imaging device, for example at least one camera, it can be a camera with a 360° field of view or a different field of view, or a plurality of cameras with different fields of views, for example 2 cameras, each having a 180° field of view, or a plurality of cameras disposed so as to allow or create a 360° field of view. In an embodiment the probe comprises several imaging devices, for example several cameras (at least one of them or all of them having for example an improved resolution or being a lower cost option); several imaging devices, for example several cameras, can be used instead of a 360° camera.

A least one camera can be a camera at least partly in the visible range and/or in the ultra-violet (u.v.) range.

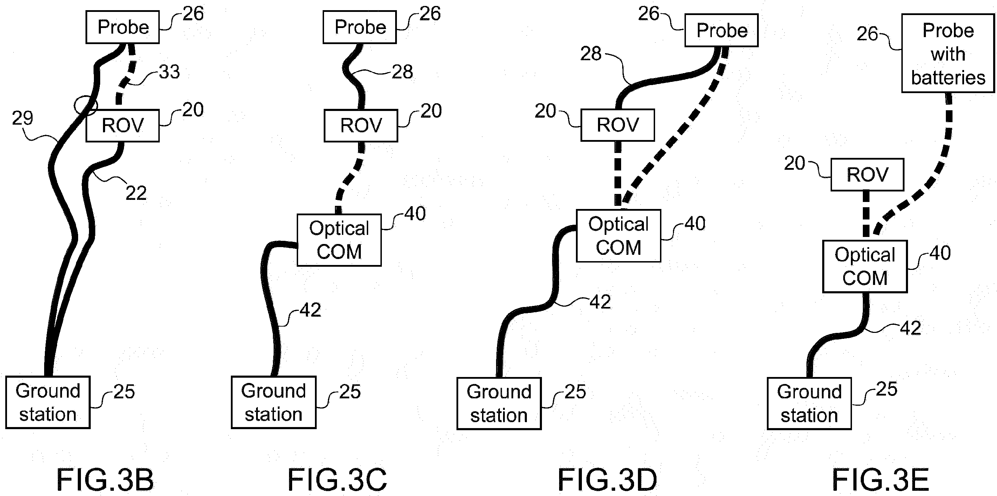

Preferably, a camera implemented as imaging device offers the ability to pan and/or zoom and/or focus on a specific area of interest, thus offering the possibility to inspect a defect without losing context of its surrounding. The panning may be virtual, for example in the case of a 360° camera and either virtual or mechanical in the case of another camera. The camera is for example a pan-tilt camera that can be orientated in two directions. The user interface, illustrated on figure 3, generally shows only a part of an image from a camera, the recorded image corresponding to what a standard camera would show. The user can orientate the view angle with the computer control that can be considered as a virtual panning system.

A 360° camera, or a live 360° video camera, offers the advantage of providing a panoramic view, which allows an inspection of the runner to maintain context awareness of the inspection areas, maintaining context allowing a systematic and thorough inspection.

The probe can contain or is provided with at least one battery and be supplied with power from said at least one battery; and/or the probe can be supplied with power from the ROV (through the tether 28). In specific embodiments:
- data are transmitted from the probe to the ROV wireless (as already explained above) and the probe is supplied with power from the ROV through tether 28;
- or data are transmitted from the probe to the ROV wireless (as already explained above) and the probe contains or is provided with at least one battery for power supply.

Alternatively, as explained below, the probe can be powered from a ground station 25, via a separate tether 29 between the probe and a ground station 25. Data or images from the probe can be sent from the probe to the ground station (in which case the tether 28 may not be implemented).

The ROV itself can be provided with an on-board imaging device 21, for example a camera and/or a scanning device 21, that can be oriented. Said imaging device 21 can be used to orient the ROV; it can also be used to visualize the probe 26 in order to facilitate guiding and positioning steps of the probe with respect to the runner. Such an imaging device 21 can be a low-resolution device (which requires lower bandwidth to transfer real time data). Both images or data from said imaging device 21 and probe 26 can be displayed on one or more display devices or screens 27a, 27b of a ground station 25 so that an operator can adjust the position of the ROV and/or the probe and/or the intensity of the light of a lighting device based on both kinds of information. In particular, if the probe 26 comprises a camera, preferably a 360° camera, real-time live video on one or more display devices 27a, 27b during navigation and inspection process considerably improves navigation, precision and performance. Displaying images or videos from both imaging device 21 and probe 26, for example live streams of both ROV navigation imaging device 21 and probe 26, can be parallelized (for example via publish-subscribe architecture), thus enabling both imaging devices 21, 26 to simultaneously stream live videos, record videos and take still snapshots for offline inspection later.

During an inspection, images or videos or data from imaging device 21 and probe 26 can be recorded, for example at the same time, for example in a memory in the ROV and/or of the computer 24 to which they can be transmitted.

In a variant, a device according to the invention comprises one or several, for example 2, light sources or lighting devices, which can be transported by the ROV and remain(s) fixed with respect to the ROV; and/or at least one light source or lighting device can be positioned at one or more location(s) in the runner (by the same or another ROV). A light source or lighting device, for example in the visible range can be a LED or a lamp or a laser. The probe 26 can thus explore an area which is illuminated by said at least one light source or lighting device and take images which can then be processed, for example by photogrammetry.

A challenge of underwater navigation is the ability to see and resolve features underwater that provide navigation context. The environment underwater may contain particles or particulate, in case of turbidity, that makes this difficult. If the imaging device 21 used for navigation and context acquisition is located physically near the light source, light reflected off the floating particulate or underwater objects directly into the camera. This makes it difficult to resolve features beyond the particles reflecting light (sometimes a few cm).

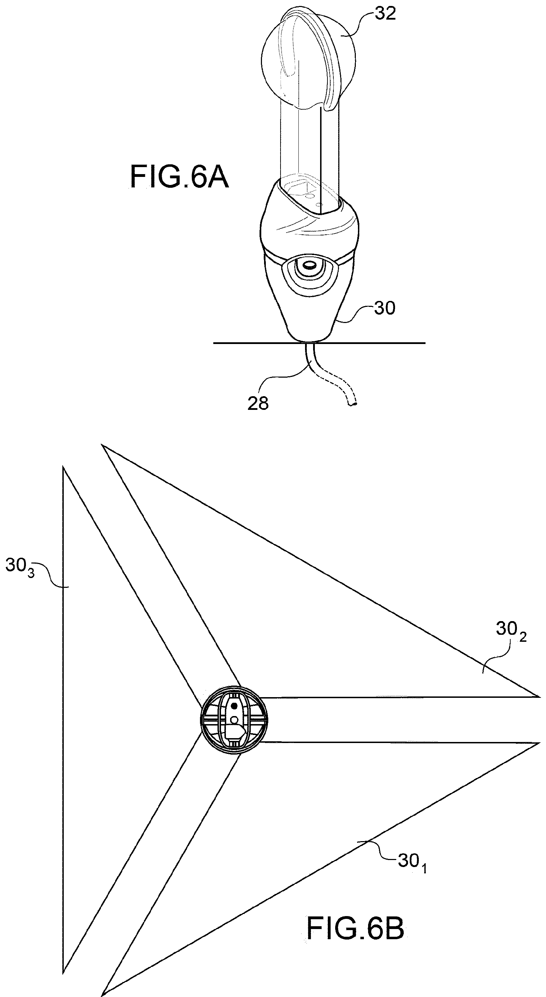

Locating the light source away from the ROV 20 (close to or on the inspection probe 26 for example) reduces this effect and enables navigation and context tracking. Figure 6A is an example of a lighting device 30 combined with an imaging device 32, for example a camera, preferably a 360° camera, and a tether 28 connecting this device with a ROV (not shown); thus, the lighting device 30 is close to the imaging device. In a preferred embodiment, it provides several lighting beams so as to illuminate a wide field, preferably of 360°, around the device; for example, the top view of figure 6B shows 3 such fields 30₁, 30₂, 30₃.

Both the probe and the ROV can be provided with one or more light source(s) or lighting device(s). This can allow an independent control of lighting from the ROV and/or from the probe and/or enables navigation from either the probe point of view or the ROV point of view. This greatly improves the ability to track the location within the confined space of a runner, enabling a much greater understanding of context.

In order to overcome specular highlights or effects, a polar light source and a polarizing filter can be implemented: the polar light source illuminates the inspected surface and the filter is disposed in front of the probe 26 (or of its imaging device, for example a camera), thus reducing specular highlights or effects.

In a variant, a device according to the invention is used in combination with another ROV or AUV, for example also according to the invention, which carries or comprises a lighting device, for example in the visible range, for example a lamp or a laser, said ROV or AUV being located closer to the probe than the ROV or AUV to which the probe is linked by the tether.

In a variant, a device according to the invention is able to transport one or several, for example 2, light sources to one or more location(s) in the runner and to deposit said light source(s) at said location(s). Then the probe 26 can explore the area which is illuminated and take data or images which are then processed, for example by photogrammetry.

A rail free ROV ("Remote Operated Vehicle") can be used to implement the invention; alternatively, it can be an AUV ("autonomous underwater vehicle").

One example of a ROV which can be implemented in this invention is proposed by Blue Robotics (see https://bluerobotics.com/).

A ROV or an AUV of a device according to the invention:
- can be mounted on wheels or on tracks and moves along a surface, for example of the suction pipe 11; alternatively, an underwater ROV or AUV can be a propeller-driven vehicle;
- can be driven by driving means, for example by electric power, for example with help of a battery and/or by a motor 23 (figure 3A); a power source can be connected via a tether 22 or can be onboard; the ROV can be controlled wireless or via a tether 22 (figure 3).

The location of the probe can be controlled by the ROV. Alternatively, the location of the probe can be controlled independently of the ROV, for example by a ground station 25, which enables more thorough inspection of more complex internal spaces.

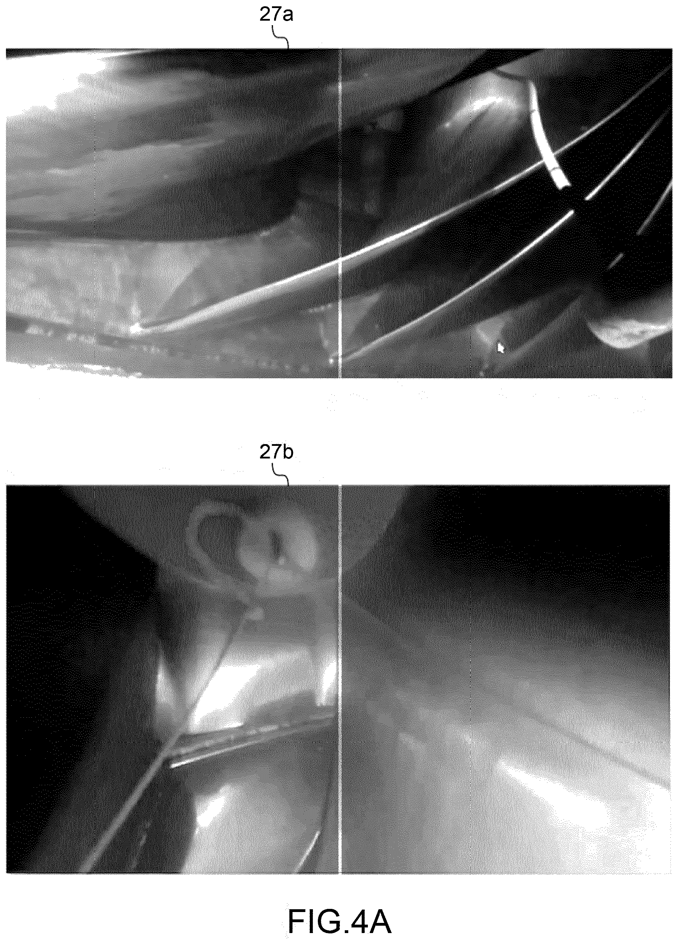

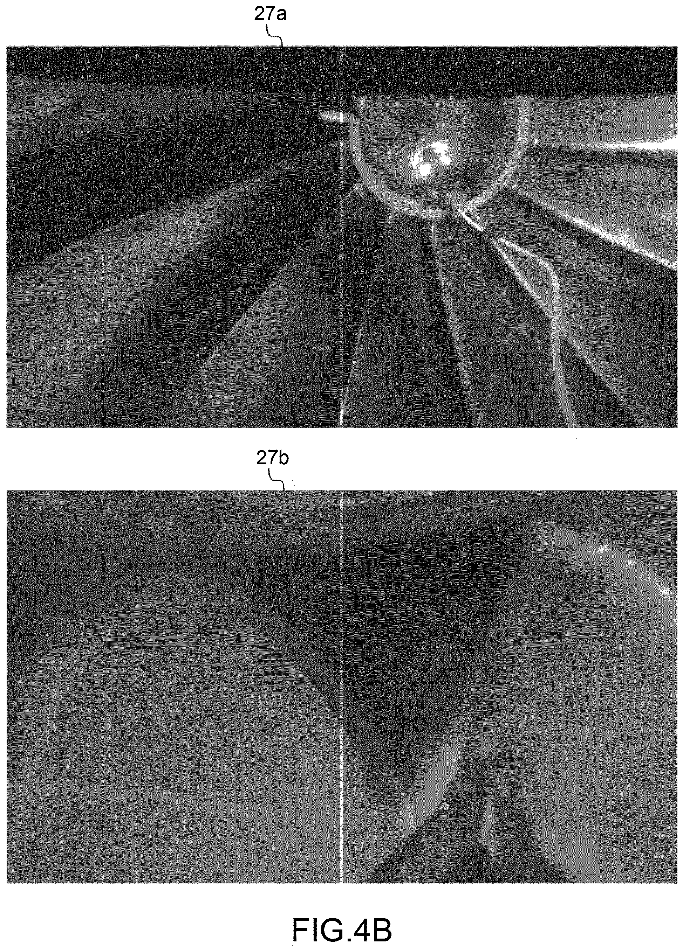

Figures 4A and 4B are examples of images recorded by a device according to the invention (the probe having a 360° camera) and displayed on two displaying devices 27a, 27b, for example screens like computer screens, respectively showing the 360° image from the probe 26 (on display device 27b) and the image from the on-board imaging device of the ROV (on display device 27a).

On both figures 4A and 4B, display device 27a shows the turbine runner itself and the external probe 26 entered in the runner (on figure 4A one can only see the tether of the external probe 26; on figure 4B one can see the full probe 26 inserted in the runner tip). While viewing the external probe 26 from the ROV and thanks to the image synchronization (either the images are perfectly synchronized or there might be a small delay between the images of the ROV & the external probe) one can easily locate the probe 26 in the runner and therefore locate any defect that would be detected by the probe.

Real time or offline analysis of the data from the ROV and/or the probe can be used to identify defect and prompt an operator to accept, reject, or provide additional information for the candidate defect.

Once a defect has been identified, it can be automatically characterized by labelling the data with information about the defect, for example one or more data among the size, depth, defect type, location, severity classification, ...

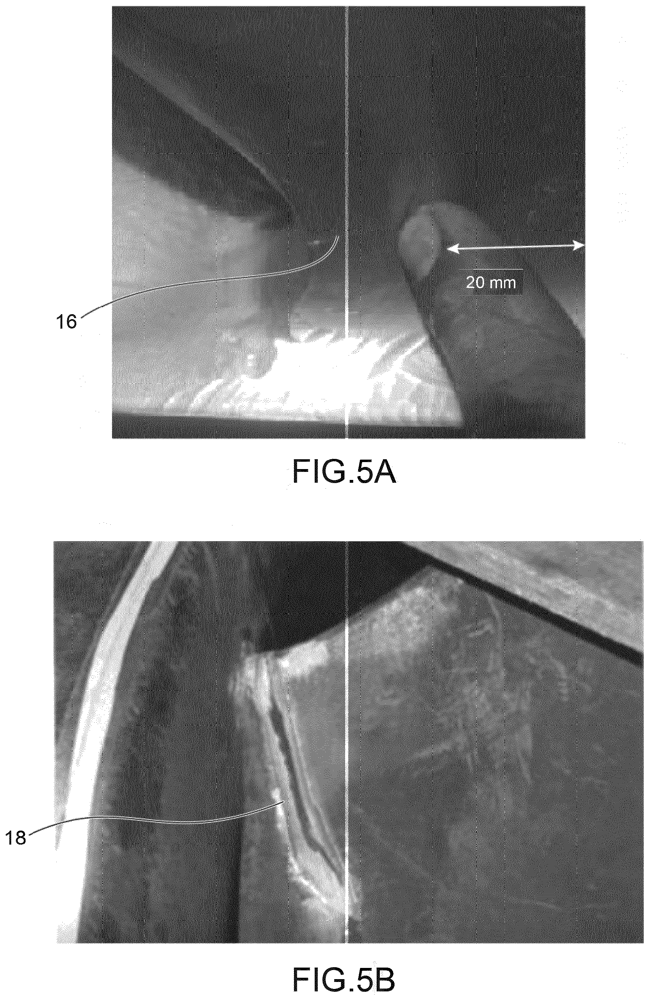

A crack is another example of a defect of a hydro-turbine (or of the runner of said hydro-turbine) to be detected. Cracks are usually surface cracks and then evolve into through-cracks after some time of propagation; they have for example a size of around 5 mm (or more) length, 1 mm (or more) depth, 0.1mm (or more) wide. A first example of a crack 16 is shown on figure 5A: it is a small crack (about 20 mm at band outlet) and should be repaired in a short or medium term in order to avoid a further propagation. A second example is shown on figure 5B which represents an advanced crack 18 (600 mm long at blade inlet); in such case, the hydraulic machine must be stopped in a short or medium term in order to avoid extreme failure. The repair can be done on site (by excavation, welding, grinding).

Cracks are essentially located at the inlet or the outlet of the runner, at the junction between the blades and the crown or the band which are the weakest locations of the runner where the highest stress concentrations occur. For Francis turbines, the majority of cracks is occurring at the runner outlet.

A plurality of devices according to the invention can be used at the same time to inspect different locations of a runner. For example, one of the probes of one such device provides vision with an imaging device, for example a camera, for example in the visible range, another one providing light or other wavelength (for example: IR) analysis with another camera.

On figure 3A the ROV 20 comprises an on-board imaging device 21, for example a camera, and is connected by tether 22 to a computer 24 (for example a microcomputer or a portable computer) of ground station 25, said computer being programmed for controlling the path followed by the ROV and the camera(s) and/or for sending instructions to perform the appropriate inspection steps. The tether 22 can comprise one or more cable(s) and/or wire(s) to allow data exchange between the ground station 25 and the ROV, for example to control the ROV 20, and/or to provide the electric power to the ROV and/or to control the probe 26.

Alternatively, a tether-less or wireless ROV is also possible, see for example https://www.hydromea.com/exray-wireless-underwater-drone/; it operates autonomously with wireless connection. The ROV can be controlled from the ground station by wireless means (for example optical means) or by such wireless means combined with a tether. For example, a ground station generates control data of the ROV and/or of the probe 26 which are sent (for example through a tether and/or one or more optical fiber(s)) to an optical component (emitter and/or receiver) and said control data are then sent by said emitter to said ROV.

In such case, the ROV can for example carry the probe (including for example one of more thruster(s) and/or batteries) and possibly any device that is too big to enter a particular location of a hydraulic machine, for example between blades of a runner; the probe is released for inspection when the ROV has reached a position under the hydraulic machine, for example under runner, and is guided, for example with at least one thruster to inspect at least part of the hydraulic machine, for example part of the runner.

The thruster(s) and/or one or more probe(s) and/or one or more lighting device(s) can be controlled either from the ROV or from the ground station, via a tether or wireless. For example, data or the image data from the probe can be wireless transmitted from the probe to the ROV and/or to the ground station 25. For example, an optical receiver receives data or images which are optically sent by the probe and the optical receiver is connected to the ground station, for example by one or more tether(s) and/or one or more optical fibre(s).

Figure 3A represents a tether 29 between the ground station 25 and the probe 26. This tether is for example for data transmission between the probe and the ground station 25 and/or for supplying the probe with power. If the tether 29 is both for exchanging data between the ground station 25 and the probe 26 and for supplying the probe with power, then tether 28 may not be implemented. As illustrated on figures 3B (see below), tether 29 can be fixed on the ROV or a specific cable can attach the probe to the ROV.

Data exchange between the probe 26 and the ground station 25 via tether 29 can be advantageous when the tether 28 has a limited bandwidth.

Both power supply of the probe 26 by the ground station 25 and data exchange between the probe 26 and the ground station 25 via tether 29 can be advantageous when the tether 28 has a limited bandwidth and is limited in power.

Figures 3B-3E are schematic presentations of different possible configurations of a system according to the invention. On these figures, the same reference numbers identify the same technical features as on the other figures and the corresponding explanations are not be repeated for the sake of clarity. In particular:
- Figure 3B shows a configuration where the probe is connected to the ground station via a tether 29, so that data can be exchanged between the probe 26 and the ground station 25 and the ground station 25 can supply the probe 26 with power; tether 29 can be fixed to the ROV or a specific cable 33 can attach the probe 26 to the ROV 20;
- Figure 3C shows a configuration where the probe 26 is connected to the ROV 20 via tether 28, so that data can be exchanged between the probe 26 and the ROV 20 and the ROV 20 can supply the probe 26 with power; communication between the ROV 20 and the ground station 25 is partly wireless: optical communication is established between the ROV and an optical component 40 which is itself connected to the ground station via a tether 42 and/or one or more optical fibre(s);
- Figure 3D shows a configuration where the probe 26 is wireless connected to an optical component 40 (receiver and/or emitter) and to the ROV via tether 28 (for power supply), so that data can be exchanged between the probe 26 and the optical component 40; control data can be exchanged between the ROV 20 and the optical component 40, which is itself connected to the ground station via a tether 42 and/or one or more optical fibre(s); tether 42 and/or one or more optical fibre(s) transmit(s) control data from the ground station 25 to the component 40 and transmit(s) data or images from the component 40 to the ground station;
- Figure 3E shows a configuration where the probe 26 is powered with batteries and is connected to an optical component 40 (receiver and/or emitter), so that data can be exchanged between the probe 26 and the optical component 40; control data can be exchanged between the ROV 20 and the optical component 40, which is itself connected to the ground station via a tether 42 and/or one or more optical fibre(s); tether 42 and/or one or more optical fibre(s) transmit(s) control data of the ROV and/or of the probe from the ground station to the component 40 and also transmit(s) data or images from the component 40 to the ground station 25.In configurations like on figures 3C-3E where the ROV 20 is connected at least partly tether-less to the ground station 25, the ROV is attached to tether 42 and goes to an appropriate location while being connected to the tether 42; it is then detached from tether 42 to continue travelling to an appropriate location from which it communicates wireless with the optical component 40.

In a particular embodiment, the communication between the probe 26 (for example an imaging device, for example a camera) and the ground station 25, for example through tether 29 and/or wireless, is bidirectional: the probe sends data and/or images to the ground station 25 and the ground station 25 controls the probe (for example the ground station switches the probe on/off, and/or adjusts a focus or any optical parameter of an imaging device, for example a camera, and/or a resolution and/or a frame rate). When the inspection is finished, the probe returns to the ROV.

Powering of the probe, for example of an imaging device, for example of a camera, can be done by batteries in the probe, or from the ROV or from a ground station (via a tether).

Data, in particular images from the probe can be processed (in real time or not) by a processor or by programmable means adequately programmed, in the ROV and/or can be transmitted to computer 24 of ground station 25, said computer 24 being programmed for processing said data and/or images, for example to generate a 3D representation or view; an image can be displayed on one or more display or screen 27a, 27b so that an operator can decide whether the hydraulic machine should be repaired. It is also possible to make measurements and generate a map of the defects detected on a blade or on any portion of a hydro turbine; such a map, giving information about the location of the defects, can be generated by computer 24 and possibly displayed.

The illustrated system can be adapted to several devices according to the invention ROVs performing inspection of different parts at the same time.

A device according to the invention performing inspection of blades 32, 34, 36 of a runner of a hydro turbine is shown on figure 3A. It comprises a ROV 20 which either propels itself up the draft tube; it is piloted remotely from the ground station 25 by an operator that uses the camera image to locate the ROV. Alternatively, the ROV is able to find its way to the runner and performs the inspection autonomously. It can have access to the draft tube through the man hole (depending on the watered or dewatered situation). It can be seen on figure 3A that the probe 26 can inspect the runner between two neighbouring blades, although the distance between two blades is limited to between 50 mm or 100 mm and 300 mm or even 500 mm.

The invention can be implemented for inspecting blades 32, 34, 36 (see for example figure 3A) of a runner, however other parts of a hydro-turbine or of a hydraulic machine can be inspected according to the invention, for example stay vanes or wicket gates or the draft tube of said hydro-turbine or any other part of a hydraulic machine.

More generally, the invention allows inspection of any submerged area of a hydraulic machine and/or of a hydroelectric installation provided that such area is accessible from the draft tube where the ROV or the AUV is located: for example blade(s), stay vanes, wicket gates and the draft tube itself.

## Claims

1. Device for inspecting a damage or a crack of part (7) of a hydro turbine, comprising at least one underwater remote operated vehicle (20) or autonomous underwater vehicle, comprising at least one floatable or buoyant probe (26) or at least one probe (26) and means to make said at least one probe floatable, said probe comprising at least one imaging device (32) and/or laser scaler, and means for transmitting data from said probe when it is distant from said vehicle.

2. Device according to claim 1, further comprising a cable or a tether (28) to connect said probe (26) and either said vehicle (20) or a ground station (25).

3. Device according to claim 1 or 2, said means to make said at least one probe floatable comprising at least one buoy and/or at least one thruster.

4. Device according to any of claims 1 to 3, said at least one imaging device comprising at least one scanner and/or camera, for example at least one ultra-violet and/or visible camera and/or a 360° camera.

5. Device according to any of claims 1 to 4, said vehicle (20) being provided with at least one on-board imaging device (21).

6. Device according to claim 5, further comprising means (24, 27a, 27b) to display data or at least one image from said probe (26) and/ or at least one image of at least part of said probe from said at least one on-board imaging device (21).

7. Device according to any of claims 1 to 6, further comprising a light source (30) for lighting at least a portion of the runner inspected by said probe (26).

8. Device according to any of claims 1 to 7, said means for transmitting data from said probe comprising an optical fibre to connect said probe (26) and either said vehicle (20) or a ground station (25).

9. Device according to any of claims 1 to 7, said means for transmitting data from said probe comprising means for a wireless transmission between said probe and said vehicle (20) or a ground station (25).

10. Device according to any of claims 1 to 9, further comprising means (24) for processing data from said probe to generate at least one image of at least a part of a surface of said hydro-turbine comprising said damage or crack.

11. Method of inspecting at least one damage or crack of a part (7) of a hydro turbine (1), comprising:
- positioning a probe (26) of at least one first device according to one of claims 1 to 10 in said hydro-turbine;
- making images and/or providing data of said at least one damage or crack of at least one part of said hydro-turbine with said probe of said first device,
- processing said images and/or said data to generate at least one image and/or data of at said least one part of said runner comprising said damage or crack.

12. Method according to claim 11, said method comprising inspecting one or more runner blade (32, 34, 36), and/or one or more stay vanes and/or one or more wicket gates and/or the draft tube of said turbine.

13. Method according to any of claims 11 or 12, said method comprising positioning one or more lighting device(s) (30), for example with said first underwater remote operated vehicle or autonomous underwater vehicle or with a second underwater remote operated vehicle or autonomous underwater vehicle, to lighten at least one surface inspected by said probe.

14. Method according to any of claims 11 to 13, said method comprising displaying data or at least one image from said probe (26) and/or at least one image of the probe taken by at least another imaging device (21).

15. Method according to one of claims 11 to 14, the hydro-turbine being of the bulb, Kaplan or Francis or pump type or reversible pump type.

## Patentansprüche

1. Vorrichtung zur Inspektion einer Beschädigung oder eines Risses eines Teils (7) einer Hydroturbine, umfassend mindestens ein ferngesteuertes Unterwasserfahrzeug (20) oder autonomes Unterwasserfahrzeug, umfassend mindestens eine schwimmende oder auftriebsfähige Sonde (26) oder mindestens eine Sonde (26) und Mittel, um die mindestens eine Sonde schwimmfähig zu machen, wobei die Sonde mindestens eine Bildgebungsvorrichtung (32) und/oder einen Laserscaler umfasst, und Mittel zum Übertragen von Daten von der Sonde, wenn sie von dem Fahrzeug entfernt ist.

2. Vorrichtung nach Anspruch 1, ferner umfassend ein Kabel oder eine Halteschnur (28) zum Verbinden der Sonde (26) und entweder des Fahrzeugs (20) oder einer Bodenstation (25).

3. Vorrichtung nach Anspruch 1 oder 2, wobei die Mittel, um die mindestens eine Sonde schwimmfähig zu machen, mindestens eine Boje und/oder mindestens ein Triebwerk umfassen.

4. Vorrichtung nach einem der Ansprüche 1 bis 3, wobei mindestens eine Bildgebungsvorrichtung mindestens einen Scanner und/oder eine Kamera umfasst, beispielsweise mindestens eine Ultraviolett- und/oder sichtbare Kamera und/oder eine 360°-Kamera.

5. Vorrichtung nach einem der Ansprüche 1 bis 4, wobei das Fahrzeug (20) mit mindestens einer fahrzeugseitigen Bildgebungsvorrichtung (21) bereitgestellt wird.

6. Vorrichtung nach Anspruch 5, ferner umfassend Mittel (24, 27a, 27b), um Daten oder mindestens ein Bild von der Sonde (26) und/oder mindestens ein Bild von mindestens einem Teil der Sonde von der mindestens einen integrierten Bildgebungsvorrichtung (21) anzuzeigen.

7. Vorrichtung nach einem der Ansprüche 1 bis 6, ferner umfassend eine Lichtquelle (30) zum Beleuchten mindestens eines Abschnitts des von der Sonde (26) inspizierten Läufers.

8. Vorrichtung nach einem der Ansprüche 1 bis 7, wobei das Mittel zum Übertragen von Daten von der Sonde eine Lichtleiterfaser umfasst, um die Sonde (26) und entweder das Fahrzeug (20) oder eine Bodenstation (25) zu verbinden.

9. Vorrichtung nach einem der Ansprüche 1 bis 7, wobei das Mittel zum Übertragen von Daten von der Sonde Mittel für ein drahtloses Übertragen zwischen der Sonde und dem Fahrzeug (20) oder einer Bodenstation (25) umfasst.

10. Vorrichtung nach einem der Ansprüche 1 bis 9, ferner umfassend Mittel (24) zum Verarbeiten von Daten von der Sonde, um mindestens ein Bild von mindestens einem Teil einer Oberfläche der Hydroturbine zu erzeugen, die die Beschädigung oder den Riss umfasst.

11. Verfahren zur Inspektion mindestens einer Beschädigung oder eines Risses eines Teils (7) einer Hydroturbine (1), umfassend:
- Positionieren einer Sonde (26) mindestens einer ersten Vorrichtung nach einem der Ansprüche 1 bis 10 in der Hydroturbine;
- Erstellen von Bildern und/oder Bereitstellen von Daten der mindestens einen Beschädigung oder Risses von einem Teil der Hydroturbine mit der Sonde der ersten Vorrichtung,
- Verarbeiten der Bilder und/oder Daten, um mindestens ein Bild und/oder Daten von mindestens einem Teil des Läufers zu erzeugen, der die Beschädigung oder den Riss umfasst.

12. Verfahren nach Anspruch 11, wobei das Verfahren die Inspektion eines oder mehrerer Läuferschaufeln (32, 34, 36) und/oder eines oder mehrerer Verweilschaufeln und/oder eines oder mehrerer Schleusen und/oder des Zugrohrs der Turbine umfasst.

13. Verfahren nach einem der Ansprüche 11 oder 12, wobei das Verfahren das Positionieren einer oder mehrerer Beleuchtungsvorrichtungen (30) umfasst, beispielsweise mit dem ersten ferngesteuerten Unterwasserfahrzeug oder autonomen Unterwasserfahrzeug oder mit einem zweiten ferngesteuerten Unterwasserfahrzeug oder autonomen Unterwasserfahrzeug, um mindestens eine von der Sonde inspizierte Oberfläche aufzuhellen.

14. Verfahren nach einem der Ansprüche 11 bis 13, wobei das Verfahren das Anzeigen von Daten oder mindestens eines Bildes von der Sonde (26) und/oder mindestens eines Bildes der Sonde umfasst, das von mindestens einer anderen Bildgebungsvorrichtung (21) aufgenommen wurde.

15. Verfahren nach einem der Ansprüche 11 bis 14, wobei es sich bei der Hydroturbine um einen Glühbirnen-, Kaplan- oder Francis- oder Pumpentyp oder umkehrbaren Pumpentyp handelt.

## Revendications

1. Dispositif d'inspection d'un dommage ou d'une fissure d'une partie (7) d'une turbine hydraulique, comportant au moins un véhicule (20) sous-marin télécommandé ou véhicule sous-marin autonome, comportant au moins une sonde (26) flottable ou flottante ou au moins une sonde (26) et des moyens de rendre flottable ladite au moins une sonde, ladite sonde comportant au moins un dispositif d'imagerie (32) et/ou dispositif de mise à l'échelle laser, et des moyens pour transmettre les données à partir de ladite sonde lorsqu'elle est éloignée dudit véhicule.

2. Dispositif selon la revendication 1, comportant en outre un câble ou une attache (28) pour connecter ladite sonde (26) et soit ledit véhicule (20) soit une station au sol (25).

3. Dispositif selon la revendication 1 ou 2, lesdits moyens de rendre flottable ladite au moins une sonde comportant au moins une bouée et/ou au moins un propulseur.

4. Dispositif selon l'une quelconque des revendications 1 à 3, ledit au moins un dispositif d'imagerie comportant au moins un scanner et/ou une caméra, par exemple au moins une caméra ultraviolette et/ou visible et/ou une caméra 360°.

5. Dispositif selon l'une quelconque des revendications 1 à 4, ledit véhicule (20) étant pourvu d'au moins un dispositif d'imagerie embarqué (21).

6. Dispositif selon la revendication 5, comportant en outre des moyens (24, 27a, 27b) pour afficher des données ou au moins une image provenant de ladite sonde (26) et/ou au moins une image d'au moins une partie de ladite sonde provenant dudit au moins un dispositif d'imagerie embarqué (21).

7. Dispositif selon l'une quelconque des revendications 1 à 6, comportant en outre une source lumineuse (30) pour éclairer au moins une portion de la roue inspectée par ladite sonde (26).

8. Dispositif selon l'une quelconque des revendications 1 à 7, lesdits moyens pour transmettre les données à partir de ladite sonde comportant une fibre optique pour connecter ladite sonde (26) et soit ledit véhicule (20) soit une station au sol (25).

9. Dispositif selon l'une quelconque des revendications 1 à 7, lesdits moyens pour transmettre les données à partir de ladite sonde comportant des moyens pour une transmission sans fil entre ladite sonde et ledit véhicule (20) ou une station au sol (25).

10. Dispositif selon l'une quelconque des revendications 1 à 9, comportant en outre des moyens (24) pour le traitement de données provenant de ladite sonde pour générer au moins une image d'au moins une partie d'une surface de ladite turbine hydraulique comportant lesdits dommage ou fissure.

11. Procédé d'inspection d'au moins un(e) dommage ou fissure d'une partie (7) d'une turbine hydraulique (1), comportant :
- le positionnement d'une sonde (26) d'au moins un premier dispositif selon l'une des revendications 1 à 10 dans ladite turbine hydraulique ;
- la réalisation d'images et/ou fourniture de données desdits au moins un(e) dommage ou fissure d'au moins une partie de ladite turbine hydraulique avec ladite sonde dudit premier dispositif,
- le traitement desdites images et/ou desdites données pour générer au moins une image et/ou donnée de ladite au moins une partie de ladite roue comportant lesdits dommage ou fissure.

12. Procédé selon la revendication 11, ledit procédé comportant l'inspection d'une ou plusieurs aubes de roue (32, 34, 36), et/ou d'une ou plusieurs aubes avant-directrices et/ou d'une ou plusieurs aubes directrices et/ou du tube d'aspiration de ladite turbine.

13. Procédé selon l'une quelconque des revendications 11 ou 12, ledit procédé comportant le positionnement d'un ou plusieurs dispositifs d'éclairage (30), par exemple avec ledit premier véhicule sous-marin télécommandé ou véhicule sous-marin autonome ou avec un deuxième véhicule sous-marin télécommandé ou véhicule sous-marin autonome, pour éclairer au moins une surface inspectée par ladite sonde.

14. Procédé selon l'une quelconque des revendications 11 à 13, ledit procédé comportant l'affichage de données ou d'au moins une image provenant de ladite sonde (26) et/ou d'au moins une image de la sonde prise par au moins un autre dispositif d'imagerie (21).

15. Procédé selon l'une des revendications 11 à 14, la turbine hydraulique étant du type bulbe, Kaplan ou Francis ou pompe ou type pompe réversible.
